# EUROPÄISCHE PATENTSCHRIFT

(11) **EP 1 791 742 B1**
(45) Veröffentlichungstag und Bekanntmachung des Hinweises auf die Patenterteilung: **23.01.2008**
(21) Anmeldenummer: 05778882.0
(22) Anmeldetag: 31.08.2005
(51) Int. Cl.: B60T 17/08

(54) **KOMBINIERTER BETRIEBSBREMS- UND FEDERSPEICHERBREMSZYLINDER**
COMBINED SERVICE BRAKE AND SPRING BRAKE CYLINDER
CYLINDRE COMBINE DE FREIN PRINCIPAL ET DE FREIN A RESSORT

(30) Priorität: 06.09.2004 DE 102004042992
(43) Veröffentlichungstag der Anmeldung: 06.06.2007
(73) Patentinhaber: KNORR-BREMSE SYSTEME FÜR NUTZFAHRZEUGE GMBH, 80809 München (DE)
(72) Erfinder: SAVAGNER, Nicolas, F-14100 Le Mesnil Eudes (FR); MAILLE , Thierry, F-14100 Rocques (FR); FANTAZI, Alain, F-14160 Dives sur mer (FR)
(74) Vertreter: Mattusch, Gundula
(86) Internationale Anmeldenummer: PCT/EP2005/009373
(87) Internationale Veröffentlichungsnummer: WO 2006/027148

(56) Entgegenhaltungen:
- EP-A- 0 452 621
- DE-A1- 2 352 313
- US-A- 3 188 922

## Beschreibung

### Stand der Technik

Die Erfindung betrifft einen kombinierten Betriebsbrems- und Federspeicherbremszylinder für Bremsanlagen von Fahrzeugen, gemäß dem Oberbegriff des Patentanspruchs 1.

Ein kombinierter Betriebsbrems- und Federspeicherbremszylinder ist aus der EP 0 452 621 B1 bekannt. Innerhalb des Gehäuses ist ein aus einem Boden und einem Zylinder gebildetes Innengehäuse eingesetzt, innerhalb welchem der Betriebsbremskolben verschiebbar geführt ist, wobei zwischen dem Betriebsbremskolben und dem Federspeicherkolben zugewandten Boden des Innengehäuses eine druckmittelbeaufschlagbare Druckkammer für den Betriebsbremskolben gebildet wird. Der Federspeicherkolben umfasst topfförmig das Innengehäuse und ist mittels einer Dichtung an der Außenwand des Innengehäuses verschiebbar geführt. Zwischen dem Boden des Innengehäuses und dem Federspeicherkolben ist die Druckkammer des Federspeicherkolbens gebildet.

Ein gattungsgemäßer kombinierter Betriebsbrems- und Federspeicherbremszylinder ist in der US 3 188 922 A beschrieben, wobei zur Druckmittelversorgung eines Druckanschlusses der Druckkammer der Betriebsbremse ein sich zwischen dem verschieblichen Boden des Federspeicherkolbens und einem Gehäuseboden erstreckender flexibler Schlauch vorgesehen sein, welcher am Druckanschluss gehalten und der Bewegung des Federspeicherkolbens folgen können muss. Da der verschiebliche Boden einstückig mit dem Federspeicherbremskolben ist, wird der Schlauch von dem sich in Zuspannstellung bewegenden Federspeicherbremskolben mitgenommen. Er befindet sich daher bei gelöster Federspeicherbremse in zusammengerolltem Zustand, während er sich bei zugespannter Federspeicherbremse aufwickelt, wobei er beim Übergang von dem einen in den anderen Zustand unter Biegebelastung gerät. Um größeren Bremsdrücken standhalten zu können, muss die Mantelwand eines solchen Schlauchs relativ groß dimensioniert werden, wodurch er allerdings steifer wird und die in ihm wirkenden Biegespannungen ansteigen, was im Hinblick auf die Biegedauerfestigkeit seine Lebensdauer herabsetzen und vor allem seine Dichtigkeit gefährdet kann, was im Extremfall zu einem Ausfall der Betriebsbremse führt, wenn die Druckkammer der Betriebsbremse nicht mehr mit Druckluft versorgt wird.

Ein weiterer kombinierter Betriebsbrems- und Federspeicherbremszylinder ist in der DE 23 52 313 A beschrieben.

Der vorliegenden Erfindung liegt die Aufgabe zugrunde, einen kombinierten Betriebsbrems- und Federspeicherbremszylinder der eingangs erwähnten Art derart weiter zu entwickeln, dass er zuverlässiger funktioniert.

Diese Aufgabe wird erfindungsgemäß durch die Merkmale von Patentanspruch 1 gelöst.

### Vorteile der Erfindung

Die Erfindung schlägt vor, dass der Boden mit Ausnahme eines radial äußeren, am Kolbenrohr befestigten, gegen den Betriebsbremskolben anschlagbaren Ringabschnitts durch eine flexible Membran gebildet wird, die sich bei belüfteter Druckkammer an einem Gehäuseboden abstützen kann.

Der maximale Berstdruck dieser Membran braucht dann nicht nach dem maximalen Bremsdruck ausgelegt werden, da sich diese Membran beim Belüften der Druckkammer der Betriebsbremse an dem starren Gehäuseboden abstützt, so dass die Wandstärke der Membran entsprechend gering dimensioniert werden kann, was ihre Flexibilität erhöht und sie sich deshalb auch für relativ große Kolbenhübe des Federspeicherkolbens eignet, ohne dass die Biegebelastung der Membran zu hoch wird. Die Druckmittelzufuhr in die Druckkammer kann dann beispielsweise über ein den Gehäuseboden durchragendes starres Rohr erfolgen, an dem ein radial innerer Rand der Membran befestigt wird. Hingegen folgt der radial äußere, mit dem Ringabschnitt verbundene Rand der Membran der Bewegung des Federspeicherbremskolbens. Da zur Realisierung dieser Anordnung keinerlei Bewegungsdichtungen notwendig sind, ergibt sich eine zuverlässige Abdichtung der Druckkammer der Betriebsbremse mit hoher Lebensdauer.

Durch die in den Unteransprüchen aufgeführten Maßnahmen sind vorteilhafte Weiterbildungen und Verbesserungen der in Patentanspruch 1 angegebenen Erfindung möglich.

Besonders bevorzugt ist der Federspeicherbremskolben mit dem Kolbenrohr etwa an seinem mittleren Durchmesser axial verbunden, wobei die Speicherfeder das Kolbenrohr umschließt. Eine radial innere Umfangsfläche des Gehäuses stellt dann eine radial äußere Lauf- und Dichtfläche für den Federspeicherbremskolben dar und zwischen dieser und einem aus einem Boden und einem Zylinder zusammengesetzten Gehäusedeckel wird eine Druckkammer des Federspeicherbremskolbens gebildet.

Eine sich am Gehäusedeckel abstützende Rückstellfeder drängt den Betriebsbremskolben gegen den verschieblichen Boden der Druckkammer der Betriebsbremse, welcher wiederum gegen einen Gehäuseboden anschlagbar ist. Vom Betriebsbremskolben ragt eine zentrale, auf einen Bremsmechanismus einwirkende Druckstange weg, welche eine Durchgangsöffnung des Gehäusedeckels durchragt.

Der weitere Aufbau des erfindungsgemäßen kombinierten Betriebsbrems- und Federspeicherbremszylinders wird durch die nachfolgende Beschreibung eines Ausführungsbeispiels deutlich.

### Zeichnungen

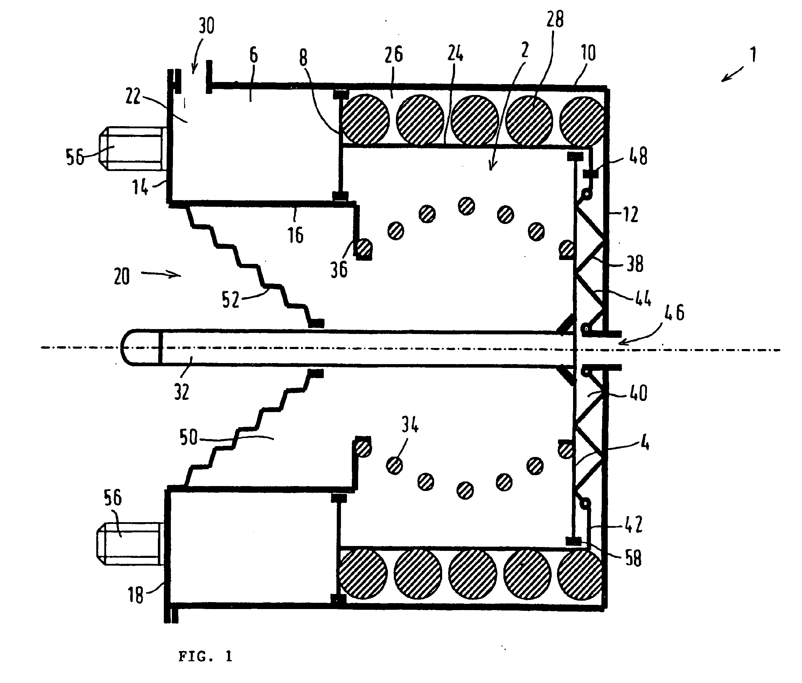

Nachstehend ist ein Ausführungsbeispiel der Erfindung in der Zeichnung dargestellt und in der nachfolgenden Beschreibung näher erläutert. In der Zeichnung zeigt die einzige Figur eine stark schematisierte Querschnittsdarstellung eines kombinierten Betriebsbrems- und Federspeicherbremszylinders gemäß einer bevorzugten Ausführungsform der Erfindung.

### Beschreibung des Ausführungsbeispiels

Die in der Figur insgesamt mit 1 bezeichnete bevorzugte Ausführungsform eines kombinierten Betriebsbrems- und Federspeicherbremszylinders bildet einen Bremsaktuator beispielsweise für Scheibenbremsen von Nutzfahrzeugen und ist pneumatisch betätigt. Er beinhaltet einen Betriebsbremszylinder 2, in dem ein Betriebsbremskolben 4 verschieblich geführt ist, sowie einen Federspeicherbremszylinder 6, der einen Federspeicherkolben 8 führt. Beide Bremszylinder 2, 6 sind in einem einzigen, vorzugsweise innen glatt zylindrisch ausgeführten Gehäuse 10 aufgenommen, das becherförmig ausgebildet ist, d.h. es wird an seinem einen Ende durch einen Gehäuseboden 12 begrenzt und weist an seinem anderen Ende eine durch einen aus einem Boden 14 und einem Zylinder 16 zusammengesetzten Gehäusedeckel 18 verschlossene Öffnung 20 auf. Zylinder 16 und Gehäuse 10 sind koaxial zueinander.

Der Federspeicherkolben ist als Ringkolben 8 ausgeführt und hat eine zentrale Durchgangsöffnung. Eine radial innere Umfangsfläche des zur Öffnung 20 gewandten Endes des Gehäuses 10 sowie der Zylinder 16 bilden je eine Lauf- und Dichtfläche für den Federspeicherkolben 8, welcher an seinem Umfang entsprechende Dichtungen tragen kann. Weiterhin wird zwischen der radial inneren Umfangsfläche des Gehäuses 10 und dem aus dem Boden 14 und dem Zylinder 16 zusammengesetzten Gehäusedeckel 18 eine Druckkammer 22 für den Federspeicherbremskolben 8 gebildet. Der Boden 14 der Druckkammer 22 ist folglich der ringförmigen Stirnfläche des Gehäusedeckels 18 bzw. des Gehäuses 10 selbst gleichzusetzen. Der Gehäusedeckel 18 kann einstückig ausgeführt sein, dann bilden der Zylinder 16 und der Boden 14 ein einziges Teil, das an das Gehäuse 10 angeflanscht ist, oder er kann auch mehrstückig ausgeführt sein. Von dem Federspeicherbremskolben 8 ragt eine als am Umfang geschlossenes Kolbenrohr 24 ausgebildete Kolbenstange in Richtung des Gehäusebodens 12 weg, wobei das Kolbenrohr 24 etwa den mittleren Durchmesser des Federspeicherbremskolbens 8 aufweist.

In einem Ringraum 26 zwischen einer radial inneren Umfangsfläche des Gehäuses 10 und einer radial äußeren Umfangsfläche des Kolbenrohrs 24 ist eine Speicherfeder 28 untergebracht, welche sich einerseits am Federspeicherbremskolben 8 und andererseits am Gehäuseboden 12 abstützt. Somit umschließt die Speicherfeder 28 das Kolbenrohr 24 des Federspeicherbremskolbens 8 vollständig. Durch einen mit der Druckkammer 22 des Federspeicherbremskolbens in Verbindung stehenden Luftanschluss 30 kann diese be- und entlüftet werden. Die Federspeicherbremse ist eine passive Bremse, d.h., sie wird durch Belüften der Druckkammer 22 gegen die Wirkung der Speicherfeder 28 gelöst und nach Entlüften der Druckkammer 22 durch die Federkräfte der Speicherfeder 28 zugespannt.

Der Federspeicherbremskolben 8 hat einen größeren Außendurchmesser als der vorzugsweise zylindrische Betriebsbremskolben 4. Dieser ist mit seinem radial äußeren Umfang am radial inneren Umfang des Kolbenrohrs 24 des Federspeicherbremskolbens 8 entlang seines gesamten Betätigungsweges axial verschieblich geführt. Das heißt, dass das Kolbenrohr 24 eine radial äu-ßere Lauf- und Dichtfläche für den Umfang des Betriebsbremskolbens 4 bildet, in welchen beispielsweise hier nicht gezeigte Dichtungen eingebettet sein können. Vom Betriebsbremskolben 4 ragt eine zentrale Druckstange 32 weg und durch die Öffnung 20 des Gehäusedeckels 18 hindurch, welche auf einen hier nicht interessierenden Bremsmechanismus der Scheibenbremse einwirkt. In die Druckstange kann ein Lösesystem für die Scheibenbremse integriert sein.

Weiterhin ist der Betriebsbremskolben 4 durch eine Rückstellfeder 34 an einem endseitig nach radial innen ragenden Kragen 36 des Gehäusedeckels 18 abgestützt. Die Rückstellfeder 34 ist im Längsquerschnitt beispielsweise nach außen oder innen bauchig ausgeformt, damit die Windungen beim Zusammenpressen axial ineinander eintauchen können, um Baulänge zu sparen.

Das Kolbenrohr 24 trägt endseitig, auf seiner vom Federspeicherbremskolben 8 abgewandten Seite einen axial verschieblichen Boden 38, wobei zwischen diesem Boden 38 und dem Betriebsbremskolben 4 eine Druckkammer 40 der Betriebsbremse ausgebildet wird. Durch die Rückstellfeder 34 ist der Betriebsbremskolben 4 gegen den verschieblichen Boden 38 gedrängt. Nicht zuletzt bilden der verschiebliche Boden 38 und das an ihm druckdicht befestigte Kolbenrohr 24 zusammen die Außenwandung des axial verschieblichen Betriebsbremszylinders 2. Der verschiebliche Boden 38 der Druckkammer 40 der Betriebsbremse ist gegen den Gehäuseboden 12 anschlagbar, insbesondere drängt ihn die Rückstellfeder 34 in diese Stellung. Darüber hinaus ist bei Betätigung der Federspeicherbremse in Zuspannrichtung der Betriebsbremskolben 4 vom Boden 38 in Bremszuspannrichtung mitnehmbar ausgebildet. Dies kann beispielsweise dadurch realisiert sein, dass der Boden 38 mit Ausnahme seines radial äußeren, am Kolbenrohr 24 befestigten Ringabschnitts 42, der, um am Betriebsbremskolben 4 anschlagen zu können, aus steifem Material gefertigt sein muss, durch eine flexible, am Ringabschnitt 42 radial innen befestigte Membran 44 gebildet wird, die sich bei belüfteter Druckkammer 40 am Gehäuseboden 12 abstützen kann. Um diesen Sachverhalt zu veranschaulichen, ist der Boden 38 der Druckkammer 40 als Sägezahnprofil dargestellt. In Wirklichkeit kann der Boden 38 auch flach sein.

Vorzugsweise ist der Boden 38 mit einem zentralen Anschluss zur Belüftung der Druckkammer 40 der Betriebsbremse versehen, der beispielsweise in einem den Gehäuseboden 12 von außen her durchragenden, in den Boden 38 einmündenden starren Rohr besteht. Dieser Anschluss wirkt mit einem im Detail aus Maßstabsgründen nicht gezeigten Einlassventil 46 zusammen. Ein Auslassventil 48 zum Entlüften der Druckkammer 40 ist beispielsweise in den Ringabschnitt 42 des Bodens 38 eingelassen. Auslass- und Einlassventil 46, 48 sind beispielsweise elektrische gesteuerte Ventile und werden durch ein aus Maßstabsgründen nicht gezeigtes elektronisches Steuergerät betätigt. Die Betriebsbremse ist eine aktive Bremse, d.h. sie wird durch Belüften der zugeordneten Druckkammer 40 zugespannt und durch Entlüften gelöst.

Der Raum 50 zwischen dem Betriebsbremskolben 4 und dem Gehäusedeckel 18 wird beispielsweise mittels einer Manschette 52 gegen Schmutz und Feuchtigkeit geschützt, wobei die Manschette eine zentrale, dichtende Durchgangsöffnung für die Druckstange 32 aufweist und radial innen am Gehäusedeckel 18 befestigt ist. Ein radial äußerer Dichtungsring 58 am Betriebsbremskolben 4 sorgt für dessen dichte Führung am Kolbenrohr 24. Alternativ könnte dies auch durch eine Membran verwirklicht sein. Mit Hilfe von Bolzen 56 kann das den Bremsaktuator tragende Gehäuse 10 mit einem Flansch der Scheibenbremse verbunden werden.

Vor diesem Hintergrund ist die Funktionsweise des erfindungsgemäßen kombinierten Betriebsbrems- und Federspeicherbremszylinders 1 wie folgt :

Zum Zuspannen der Betriebsbremse bei gelöster Federspeicherbremse wird bei geschlossenem Auslassventil 48 Druckluft über das geöffnete Einlassventil 46 in die Druckkammer 40 der Betriebsbremse eingespeist. Dadurch wird einerseits die den Boden 38 der Druckkammer 40 bildende Membran 44 gegen den Gehäuseboden 12 gedrängt und andererseits der Betriebsbremskolben 4 in der Figur nach links verschoben, wobei sein radial äußerer Umfang dichtend an der radial inneren Umfangsfläche des Kolbenrohres 24 entlang gleitet. Der in der Druckkammer 22 der Federspeicherbremse herrschende Druck sorgt dafür, dass die Speicherfeder 28, wie in der Figur gezeigt, zusammengepresst ist und die Federspeicherbremse folglich noch gelöst ist. Zum Lösen der Betriebsbremse ist lediglich die zugeordnete Druckkammer 40 zu entlüften, wobei die Rückstellfeder 34 den Betriebsbremskolben 4 in seine Ausgangsstellung zurückschiebt.

Zum Einlegen der Federspeicherbremse, beispielsweise im Parkbremsfall, wird die Druckkammer 40 der Betriebsbremse über das Auslassventil 48 und gleichzeitig auch die Druckkammer 22 der Federspeicherbremse entlüftet, woraufhin die Speicherfeder 28 den Federspeicherbremskolben 8 nach links verschiebt. Dieser kann über das Kolbenrohr 24 den Boden 38 der nun entlüfteten Druckkammer 40 der Betriebsbremse mitnehmen, weil dieser Bewegung aufgrund der entlüfteten Druckkammer 40 kein Druckwiderstand entgegensteht. Wenn der Federspeicherbremskolben 8 seine Zuspannstellung erreicht hat, ist folglich auch der Betriebsbremskolben 4 durch die Wirkung der Speicherfederkräfte in der zuspannten Lage arretiert.

Zum Einlegen der Parkbremse kann der Federspeicherbremskolben auch den bereits zuvor zugespannten Betriebsbremskolben 4 arretieren, indem die zunächst belüftete Druckkammer 40 der Betriebsbremse entlüftet und der Federspeicherbremskolben 8 durch Entlüften seiner Druckkammer 22 in Zuspannstellung nach links nachgeführt wird. Zum Halten der Parkbremse in der zugespannten Stellung über einen längeren Zeitraum ist folglich keine Druckluft erforderlich.

Zum Lösen der Federspeicherbremse wird die Druckkammer 22 der Feder speicherbremse belüftet, woraufhin sich der Federspeicherbremskolben 8 gegen die Wirkung der Speicherfeder 28 zusammen mit dem Kolbenrohr 24 und dem Boden 38 der Druckkammer 40 der Betriebsbremse nach rechts bewegt. Dieser Bewegung kann der im Anschlag am Boden 38 seiner Druckkammer befindliche Betriebsbremskolben 4 folgen, weil ihn die Rückstellfeder 34 dorthin drängt und weil die nach wie vor entlüftete Druckkammer 40 der Betriebsbremse keinen Druckwiderstand liefert.

### Bezugszeichenliste

- 1: kombinierter Betriebsbrems- und Federspeicherzylinder
- 2: Betriebsbremszylinder
- 4: Betriebsbremskolben
- 6: Federspeicherbremszylinder
- 8: Federspeicherbremskolben
- 10: Gehäuse
- 12: Gehäuseboden
- 14: Boden
- 16: Zylinder
- 18: Gehäusedeckel
- 20: Öffnung
- 22: Druckkammer
- 24: Kolbenrohr
- 26: Ringraum
- 28: Speicherfeder
- 30: Luftanschluss
- 32: Druckstange
- 34: Rückstellfeder
- 36: Kragen
- 38: Boden
- 40: Druckkammer
- 42: Ringabschnitt
- 44: Membran
- 46: Einlassventil
- 48: Auslassventil
- 50: Raum
- 52: Manschette
- 56: Bolzen
- 58: Dichtung

## Patentansprüche

1. Kombinierter Betriebsbrems- und Federspeicherbrermzylinder (1) für Bremsanlagen von Fahrzeugen mit einem innerhalb eines beiden Bremszylindern (2, 6) gemeinsamen Gehäuses (10) geführtem Federspeicher- und Betriebsbremskolben (4, 8), wobei der Federspeicherbremskolben (8) durch wenigstens eine Speicherfeder (28) belastet ist und einen größeren Außendurchmesser als der Betriebsbremskolben (4) aufweist und der Federspeicherbremskolben (8) ein Ringkolben ist und zumindest ein Teil seiner als Kolbenrohr (24) ausgebildeten Kolbenstange den Betriebsbremskolben (4) umschließt und eine radial äußere Lauf- und Dichtfläche für ihn bildet, wobei das Kolbenrohr (24) des Federspeicherbremskolbens (8) auf seiner vom Federspeicherbremskolben (8) abgewandten Seite einen axial verschieblichen Boden (38) trägt und zwischen diesem Boden (38) und dem Betriebsbremskolben (4) eine Druckkammer (40) der Betriebsbremse gebildet wird, **dadurch gekennzeichnet, dass** der Boden (38) mit Ausnahme eines radial äußeren, am Kolbenrohr (24) befestigten, gegen den Betriebsbremskolben (4) anschlagbaren Ringabschnitts (42) durch eine flexible Membran (44) gebildet wird, die sich bei belüfteter Druckkammer (40) an einem Gehäuseboden (12) abstützen kann.

2. Betriebsbrems- und Federspeicherbremszylinder nach Anspruch 1, **dadurch gekennzeichnet, dass** der Federspeicherbremskolben (8) mit dem Kolbenrohr (24) etwa an seinem mittleren Durchmesser axial verbunden ist.

3. Betriebsbrems- und Federspeicherbremszylinder nach wenigstens einem der vorhergehenden Ansprüche, **dadurch gekennzeichnet, dass** die Speicherfeder (28) das Kolbenrohr (24) des Federspeicherbremskolbens (8) umschließt.

4. Betriebsbrems- und Federspeicherbremszylinder nach wenigstens einem der vorhergehenden Ansprüche, **dadurch gekennzeichnet, dass** eine radial innere Umfangsfläche des Gehäuses (10) eine radial äußere Lauf- und Dichtfläche für den Federspeicherbremskolben (8) bildet.

5. Betriebsbrems- und Federspeicherbremszylinder nach Anspruch 4, **dadurch gekennzeichnet, dass** zwischen der radial inneren Umfangsfläche des Gehäuses (10) und einem aus einem Boden (14) und einem Zylinder (16) zusammengesetzten Gehäusedeckel (18) eine Druckkammer (22) der Federspeicherbremse gebildet wird.

6. Betriebsbrems- und Federspeicherbremszylinder nach Anspruch 5, **dadurch gekennzeichnet, dass** sich eine Rückstellfeder (34) des Betriebsbremskolbens (4) am Gehäusedeckel (18) abstützt.

7. Betriebsbrems- und Federspeicherbremszylinder nach Anspruch 6 **dadurch gekennzeichnet, dass** die Rückstellfeder (34) den Betriebsbremskolben (4) gegen den verschieblichen Boden (38) der Druckkammer (40) des Betriebsbremse drängt.

8. Betriebsbrems- und Federspeicherbremszylinder nach Anspruch 7, **dadurch gekennzeichnet, dass** der Betriebsbremskolben (4) bei Betätigung der Federspeicherbremse in Zuspannrichtung vom Boden (38) in Bremszuspannrichtung mitnehmbar ausgebildet ist.

9. Betriebsbrems- und Federspeicherbremzylinder nach Anspruch 8, **dadurch gekennzeichnet, dass** der Boden (38) mit wenigstens einem Anschluss (46, 48) zur Be- und/oder Entlüftung der Druckkammer (40) der Betriebsbremse versehen ist.

10. Betriebsbrems- und Federspeicherbremszylinder nach Anspruch 9, **dadurch gekennzeichnet, dass** vom Betriebsbremskolben (4) eine zentrale Druckstange (32) wegragt, welche auf einen Bremsmechanismus einwirkt.

11. Betriebsbrems- und Federspeicherbremszylinder nach Anspruch 10, **dadurch gekennzeichnet, dass** die Druckstange (32) eine Durchgangsöffnung des Gehäusedeckels (18) durchragt.

12. Betriebsbrems- und Federspeicherbremszylinder nach Anspruch 11, **dadurch gekennzeichnet, dass** sich die Speicherfeder (28) einerseits am Federspeicherbremskolben (8) und andererseits am Gehäuseboden (12) abstützt.

## Claims

1. Combined service brake and spring brake cylinder (1) for brake units of vehicles, with a spring brake piston and a service brake piston (4, 8) guided within a housing (10) common to the two brake cylinders (2, 8), such that the spring brake piston (8) is acted upon by the force of at least one spring (28) and has an outer diameter larger than that of the service brake piston (4) and the spring brake piston (8) is an annular piston and at least part of its piston rod, which is made as a piston tube (24), surrounds the service brake piston (4) and forms a radially outer sliding and sealing surface for it, the piston tube (24) of the spring brake piston (8) having on its side that faces away from the spring brake piston (8) an axially displaceable bottom (38) such that a pressure chamber (40) of the service brake is formed between the said bottom (38) and the service brake piston (4), **characterised in that** except for a radially outer annular section (42) attached to the piston tube (24) that can be moved up against the service brake piston (4), the said bottom (38) is formed by a flexible membrane (44) which can support itself against a bottom (12) of the housing when the pressure chamber (40) is pressurised.

2. Service brake and spring brake cylinder according to Claim 1, **characterised in that** the spring brake piston (8) is connected axially to the piston tube (24) approximately at its central diameter.

3. Service brake and spring brake cylinder according to at least one of the preceding claims, **characterised in that** the spring (28) surrounds the piston tube (24) of the spring brake piston (8).

4. Service brake and spring brake cylinder according to at least one of the preceding claims, **characterised in that** a radially inner circumferential surface of the housing (10) forms a sliding and sealing surface for the spring brake piston (8).

5. Service brake and spring brake cylinder according to Claim 4, **characterised in that** a pressure chamber (22) of the spring brake is formed between the radially inner circumferential surface of the housing (10) and a housing cover (18) that consists of a bottom (14) and a cylinder (16).

6. Service brake and spring brake cylinder according to Claim 5, **characterised in that** a restoring spring (34) of the service brake piston (4) rests against the housing cover (18).

7. Service brake and spring brake cylinder according to Claim 6, **characterised in that** the restoring spring (34) pushes the service brake piston (4) towards the displaceable bottom (38) of the pressure chamber (40) of the service brake.

8. Service brake and spring brake cylinder according to Claim 7, **characterised in that** when the spring brake is actuated, the service brake piston (4) is designed to be carried along in the brake application direction away from the bottom (38).

9. Service brake and spring brake cylinder according to Claim 8, **characterised in that** the bottom (38) is provided with at least one connection (46, 48) to enable pressurising and/or venting of the pressure chamber (40) of the service brake.

10. Service brake and spring brake cylinder according to Claim 9, **characterised in that** a central push-rod (32) projects from the service brake piston (4) and acts upon a brake mechanism.

11. Service brake and spring brake cylinder according to Claim 10, **characterised in that** the push-rod (32) passes through an opening in the housing cover (18).

12. Service brake and spring brake cylinder according to Claim 11, **characterised in that** the spring (28) rests at one end against the spring brake piston (8) and at the other end against the bottom (12) of the housing.

## Revendications

1. Cylindre de frein de service et de frein à ressort accumulateur combiné (1) pour des installations de freinage de véhicules, comportant un piston de frein à ressort accumulateur et un piston de frein de service (4, 8), guidés dans un boîtier (10) commun à l'intérieur de l'un des deux cylindres de frein (2, 6), le piston du frein à ressort accumulateur (8) étant sollicité par au moins un ressort accumulateur (28) et ayant un diamètre extérieur supérieur à celui du piston du frein de service (4), et le piston du frein à ressort (8) accumulateur étant un piston annulaire et au moins une partie de sa tige de piston, réalisée sous forme de tube (24), entourant le piston du frein de service (4) et formant pour celui-ci une surface de roulement et d'étanchéité radialement extérieure, le tube (24) du piston du frein à ressort (8) accumulateur, sur sa face opposée au piston du frein à ressort (8) accumulateur, comportant un fond (38) mobile dans le sens axial, et une chambre de pression (40) du frein de service est formée entre ce fond (38) et le piston du frein de service (4), **caractérisé en ce que** le fond (38), à l'exception d'une partie annulaire (42) radialement extérieure, fixée sur le tube (24) et apte à venir buter contre le piston du frein de service (4), est formé par une membrane (44) flexible, qui peut prendre appui sur un fond (12) du boîtier lorsque la chambre de pression (40) est alimentée en air.

2. Cylindre de frein de service et de frein à ressort accumulateur combiné selon la revendication 1, **caractérisé en ce que** le piston du frein à ressort (8) accumulateur est relié au tube (24) dans le sens axial sensiblement au niveau de son diamètre médian.

3. Cylindre de frein de service et de frein à ressort accumulateur combiné selon au moins l'une des revendications précédentes, **caractérisé en ce que** le ressort accumulateur (28) entoure le tube (24) du piston du frein à ressort (8) accumulateur.

4. Cylindre de frein de service et de frein à ressort accumulateur combiné selon au moins l'une des revendications précédentes, **caractérisé en ce qu'**une surface périphérique radialement intérieure du boîtier (10) forme une surface de roulement et d'étanchéité radialement extérieure pour le piston du frein à ressort (8) accumulateur.

5. Cylindre de frein de service et de frein à ressort accumulateur combiné selon la revendication 4, **caractérisé en ce qu'**une chambre de pression (22) du frein à ressort est formée entre la surface périphérique radialement intérieure du boîtier (10) et un couvercle (18) du boîtier, formé par un fond (14) et un cylindre (16).

6. Cylindre de frein de service et de frein à ressort accumulateur combiné selon la revendication 5, **caractérisé en ce qu'**un ressort de rappel (34) du piston du frein de service (4) prend appui sur le couvercle (18) du boîtier.

7. Cylindre de frein de service et de frein à ressort accumulateur combiné selon la revendication 6, **caractérisé en ce que** le ressort de rappel (34) du piston du frein de service (4) pousse contre le fond (38) mobile de la chambre de pression (40) du frein de service.

8. Cylindre de frein de service et de frein à ressort accumulateur combiné selon la revendication 7, **caractérisé en ce que** le piston du frein de service (4) est réalisé de manière à être entraîné dans le sens de serrage du frein lorsque le frein à ressort est actionné dans le sens de serrage par le fond (38).

9. Cylindre de frein de service et de frein à ressort accumulateur combiné selon la revendication 8, **caractérisé en ce que** le fond (38) est muni d'au moins un raccord (46, 48) pour alimenter en air et/ou purger la chambre de pression (40) du frein de service.

10. Cylindre de frein de service et de frein à ressort accumulateur combiné selon la revendication 9, **caractérisé en ce qu'**une tige de pression (32) centrale s'écarte du piston du frein de service (4) et agit sur un mécanisme de freinage.

11. Cylindre de frein de service et de frein à ressort accumulateur combiné selon la revendication 10, **caractérisé en ce que** la tige de pression (32) passe dans un orifice traversant du couvercle (18) du boîtier.

12. Cylindre de frein de service et de frein à ressort accumulateur combiné selon la revendication 11, **caractérisé en ce que** le ressort accumulateur (28) prend appui, d'une part, sur le piston du frein à ressort (8) accumulateur et, d'autre part, sur le fond (12) du boîtier.
